# EUROPÄISCHE PATENTSCHRIFT

(11) **EP 1 398 139 B1**
(45) Veröffentlichungstag und Bekanntmachung des Hinweises auf die Patenterteilung: **15.08.2007**
(21) Anmeldenummer: 03020168.5
(22) Anmeldetag: 05.09.2003
(51) Int. Cl.: B29C 67/24, B29D 29/08, F16G 1/28, B29K 75/00

(54) **Treibriemen**
Driving belt
Courroie de transmission

(30) Priorität: 10.09.2002 DE 10242200
(43) Veröffentlichungstag der Anmeldung: 17.03.2004
(73) Patentinhaber: Arntz Beteiligungs GmbH & Co. KG, 37671 Höxter (DE)
(72) Erfinder: Ballhausen, Ulrich, Dr., 33014 Bad Driburg (DE); King, Gerry, Londonderry BT48 887 (GB)
(74) Vertreter: Sroka, Peter-Christian

(56) Entgegenhaltungen:
- EP-A- 0 829 497
- EP-A- 0 841 500
- WO-A-94/13722
- WO-A-96/02584
- WO-A-02/055920
- WO-A-03/023254
- US-A- 5 112 282
- US-A- 6 046 297
- US-B1- 6 392 002
- PATENT ABSTRACTS OF JAPAN vol. 014, no. 322 (C-0739), 10. Juli 1990 (1990-07-10) & JP 02 115210 A (NITTA IND CORP), 27. April 1990 (1990-04-27)

## Beschreibung

Die Erfindung betrifft einen Treibriemen mit einem aus unter Verwendung von 4,4'-Methylenbis-(3-chlor-2,6-diethylenanilin) polymerisierten Polyurethan bestehenden Riemenkörper, in den Zugelemente aus Cordfäden eingebettet sind.

Die Erfindung bezieht sich auf zur Kraftübertragung dienende Treibriemen der verschiedensten Art z.B. Keilriemen, Doppel- und Mehrfachkeilriemen, Zahnriemen, Flachriemen, Rippenbänder und dergleichen.

Als Zugelemente werden üblicherweise sogenannte Cordfäden aus schraubenförmig gewendelten Aramid-Fasern/-Filamenten oder gemäß EP 0 841 500 A2 Kohlenstoff /Stahl- faser- oder Glasfaser/-Filamente verwendet.

Die Verwendung von Polyurethan für Treibriemen gehört zum Stand der Technik, wie es beispielsweise in der EP 00 92 361 B1 (im wesentlichen entsprechend US 4 838 843), der US 5 870 194 und weiteren Patentschriften beschrieben ist.

Das den Riemenkörper bildende Polyurethan wird aus Pre-Polymeren mittels Vemetzungs- und/oder Kettenverlängerungsmitteln hergestellt. Bei der Herstellung von Treibriemen jeglicher Art wird als Vernetzungsmittel in der Regel 4,4'-Methylenbis (2-chloranilin) mit der chemischen Formel C₁₃H₁₂Cl₂N₂ verwendet. Dieses unter der Kurzbezeichnung MbOCA auf dem Markt befindliche Vernetzungsmittel ist AMES-positiv.

In der WO-A-9602584 sind Treibriemen aus einem Polyurethan beschrieben, das unter Verwendung von 4,4'-Methylenbis-(3'- chlor-2,6-diethylenanilin) mit der chemischen Formel C₂₁H₂₈Cl₂N₂ und der Kurzbezeichnung M-CDEA polymerisiert worden ist.

Bei diesem Vernetzungsmittel handelt es sich um eine AMES-negative Substanz, die in überraschender Weise zu einer Verbesserung der Riemen-Festigkeit führt.

Bei hinsichtlich des Riemenprofils T10/1000/Breite 16 mm gleichen Riemen mit einer Cordeinlage aus Stahlfasern/-filamenten ergeben sich die aus der folgenden Tabelle ersichtlichen Werte, die sich analog auf anders gestaltete Cordeinlagen übertragen lassen:

| Polyurethan | Drehmoment (Nm) | | | |
|---|---|---|---|---|
| mit | 3 | 5 | 7 | 9 |
| MbOCA | 300 Std. | 300 Std. | 42 Std. | 22 Std. |
| M-CDEA | 300 Std. | 300 Std. | 300 Std. | 300 Std. |

Bei der Verwendung von M-CDEA wird außerdem das ansonsten häufig auftretende Abscheren der Zähne herabgesetzt, wodurch bisher die Synchronität während des Riemenlaufs verloren ging.

Bei den in der EP 0 092 361 B1 beschriebene Zahnriemen, bei denen der Zahnriemenkörper aus Polyurethan mit darin eingebetteten, hochfesten Zugelementen besteht, sind die Zähne zusätzlich von einer verschleißbeständigen Gewebe-Verstärkung überdeckt. Um eine hohe Lastübertragungsfähigkeit zu erreichen, bestehen die Zugelemente aus einem textilen Cord-Material aus schraubenlinienförmig gewickelten Aramid-Fasern, die in Abständen nebeneinander zwischen einer äußeren Schicht des Zahnriemenkörpers und den eine innere Schicht des Zahnriemenkörpers bildenden Zähnen angebracht ist. Um eine ausreichende lastübertragende Bindung zwischen der äußeren Schicht und der inneren, die Zähne umfassenden Schicht zu gewährleisten, belegt der Cord etwa 64% bis etwa 81% der Riemenbreite.

Um eine betriebsbedingte Ermüdung der verwendeten Aramid-Zugelemente zu kompensieren, ist die Ausgangs-Zugfestigkeit dieser Zugelemente überdimensioniert, um auf diese Weise einen für die meisten Anwendungsfälle ausreichenden Zeitrahmen für denGebrauch dieser Zahnriemen zu erreichen.

Gemäß EP 0 841 500 A2 ist es weiterhin bekannt, für die Zugelemente einen Cord aus Kohlenstofffasern zu verwenden, wobei auch hier durch eine deutliche Überdimensionierung der Zugkraft der Zugelemente eine für die meisten Fälle befriedigende Zeitstandsfestigkeit erreicht wird.

Die in Zahnriemen auftretende hohe Zugbelastung führt u.a. zu einer starken Querbelastung innerhalb der Zugelemente. Diese Beanspruchung wird durch die Struktur des gedrehten Cords noch verstärkt. Durch die gedrehte Form des Cords wird jede Kraft in Längsrichtung auch in eine Kraftkomponente in Querrichtung, also Kontraktion, umgeformt. Auf solche Kräfte reagieren besonders Aramid-Fasern/-Filamente sehr empfindlich. Diese Querkontraktion führt zu einer Schädigung der Fasern, was zu einem schnellen und vorzeitigem Verlust an Zugfestigkeit führt.

Zur Behebung dieser Nachteile werden erfindungsgemäß Cord-Zugelemente gemäß Anspruch 1 vorgeschlagen

Gemäß in Unteransprüchen behandelten Lösungsansätzen bestehen die Cordfäden, vorzugsweise in einem Anteil von 4 - 96 %, aus Polyester-Polyacrylat-Fasern bzw. -Filamenten, die durch Schmelzspinnen aus Flüssigkristall-Polymeren hergestellt sind, und, vorzugsweise in einem Anteil von 96 - 4 %, aus Polyparaphenylen-2,6-benzabisoxazol-Fasern/-Filamenten, im folgenden als PBO bezeichnet.

Die erfindungegemäße Lösung beruht auf der Idee, als Zugträger nicht oder nicht nur Aramidfasern einzusetzen. Bisher wurden hauptsächlich nur Fasern aus Aramiden oder Kohlenstoff als geeignet angesehen, da die Festigkeit solcher Fasern hinreichend hoch ist. Andere polymere Fasern wie z.B. Polyester sind wegen ihres geringen Moduls (hohe Dehnung) und ihrer niedrigen Festigkeit nicht geeignet für die Anwendung in Hochleistungszahnriemen aus Polyurethan (PU).

Das für die Herstellung dieser Fasern verwendete Polyester-Polyacrylat hat im wesentlichen die folgende Molekularstruktur

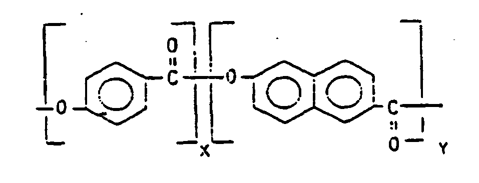

In der folgenden Tabelle sind einige typische Daten solcher Polyester-Polyacrylat-Fasern/-Filamente am Beispiel Vectran ® HS, hergestellt von Celanese Acetate L.L.C., Charlotte, North Carolina (USA), aufgezeigt.

Es zeigt sich, daß besonders die Abriebfestigkeit, welche als Maß für die Ermüdung herangezogen werden kann, bis zu ca. 10 mal höher ausfällt, als bei bekannten Aramiden (Para- und Metaaramiden).

Im folgenden sind einige technische Eigenschaften von Fasern/Filamenten aus Polyester-Polyacrylat, entsprechend Vectran HS, und PBO im Vergleich zu reinen Aramidfasern dargestellt:

| Polyester-Polyacry- verschiedene Aramidfasern zum Vergleich lat-Faser | | | | | PBO |
|---|---|---|---|---|---|
| Faser | Vectran HS | Kevlar 29 | Technora T200 | Twaron 1055 | Zvlon Tovobo |
| Denier | 1500 | 1609 | 1512 | 1485 | 500 |
| Spez.Bruchfestigkeit (g/D) | 23,0 | 19,4 | 24,9 | 21,2 | 40 |
| Bruchdehnung (%) | 2 - 3.3 | 3,6 | 4.2 | 2.6 | 2 - 3 |
| Start Modul (g/D) | 525 | 458 | 574 | 712 | 1200-2100 |
| Abriebbeständigkeit (Zyklen) | 14795 | 1249 | 1681 | 588 | ∼ 3750 |

### Geringe Temperaturempfindlichkeit

Die Festigkeit gegenüber Riemen mit Aramid als Zugträger bei einer Temperaturbelastung von 275°C über 24h fällt nur auf 85% des Ursprungs ab, gegenüber 70% bei Aramid.

Es ist praktisch keine Verringerung der Festigkeit bei häufigem Erwärmen und Abkühlen feststellbar. Dies ist eine typische Belastung in anspruchsvoller Umgebung. Aramid zeigt in solchem Falle starke Ermüdungserscheinungen, welche zu einer Reaktion der Ausgangsfestigkeit auf ca. 60% führt.

### Geringe chemische Empfindlichkeit

Besonders in PU-Zahnriemen ist der Cord den aggressiven Medien in der Umgebung ausgesetzt. Er ist besonders an den Flanken nicht geschützt. So führt z.B. der Einsatz von Riemen in Schwimmingpools immer wieder zu Problemen, da das dort eingesetzte Chlor den Zugträger angreift. Hier zeigt sich die erfindungsgemäße Verwendung der o.g. Faser als besonders vorteilhaft, da hier keine Empfindlichkeit gegenüber vielen aggressiven Chemikalien besteht.

### Gute Eigenschaften bei langanhaltender hoher Belastung (Kriechen)

Zahnriemen mit z.B. Vectran HS als Zugträger zeigen auch unter hoher, langanhaltender Belastung kein Kriechen. Sie müssen deshalb nicht nachgespannt werden, und die eingesetzten Riemenspanner können enger toleriert werden. Damit ist auch bei Zahnriemen unter hoher Dauerbelastung eine extrem hohe Positioniergenauigkeit erreichbar.

### Gute Biegewechselfestigkeit erhöht die Lebensdauer deutlich

Die Biegewechselfestigkeit von Polyester-Polyacrylat-Fasern ist im Vergleich zu Aramidfasern deutlich besser. Da Antriebs- und Positionierriemen einer permanenten Biegebeanspruchung ausgesetzt sind, ist diese Eigenschaft von besondererBedeutung für die Lebensdauer eines Zahnriemens aus PU oder Gummi mit z.B. Vectran HS als Zugträger. Ein vergleichbarer Riemen mit Vectran HS als Zugträger hat nach 3000 Zyklen noch 70% der Ausgangsfestigkeit.

### Dämpfungseigenschaften

Ein mit diesen Hochleistungsfasern im Zugträger ausgerüsteter Riemen zeigt ein besonders gutes Dämpfungsverhalten im Vergleich zu Riemen mit Aramid. Diesist direkt ein Vorteil für die Laufruhe insbesondere von Zahnriemen, da diese durch den von den Zähnen hervorgerufenen Polygoneffekt einer ständigen Anregung in verschiedenen Frequenzen unterliegen. Da die Anforderungen an die Laufruhe besonders auch durch steigendes Umweltbewußtsein und damit gestiegenem Interesse an leisen Antrieben an Bedeutung gewinnt, ist dies ein nicht zu unterschätzender Vorteil von Riemen mit solchen Fasern als Zugträger.

Durch die Einbeziehung von PBO-Fasern/-Filamenten in die Cord-Zugelemente können die Eigenschaften des Riemens in wesentlichem Umfang verbessert werden.

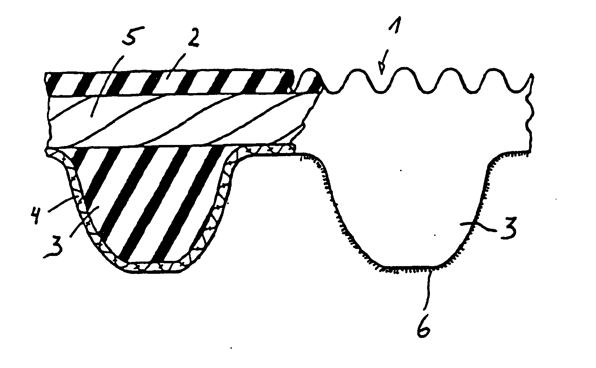

Die Erfindung wird im folgenden an Hand eines in der Zeichnung im Schnitt dargestellten Zahnriemens (stellvertretend für Treibriemen allgemeiner Art) näher beschrieben.

Wie bei dem Zahnriemen gemäß EP 0 841 500 A2 hat der Zahnriemen 1 eine äußere Schicht 2 aus gegebenenfalls gewebeverstärktem Polyurethan (PU). An diese äußere Schicht ist eine innere, Zähne 3 bildende Schicht ebenfalls aus Polyurethan angeformt. In den aus den äußeren und inneren Schichten bestehenden Polyurethankörper sind hochfeste Zugelemente (Zugträger) aus schraubenlinienförmig gewickelten Cordfäden 5 eingebettet, die mit seitlichem Abstand voneinander liegen und etwa 64 - 81 % der Riemenbreite belegen. Die Zähne 3 sind von einer Materialbahn 4 aus verschleißbeständigem Material bedeckt.

Gemäß der Erfindung bestehen die Cordfäden 5 vorzugsweise aus Polyester-Polyacrylat-Fasern, die durch Schmelzspinnen aus Flüssigkristall-Polymeren hergestellt sind. Diese Polyester-Polyacrylat-Fasern haben vorzugsweise die in der obigen Tabelle für Vectran HS angegebenen Werte.

Die die Zähne überdeckende Materialbahn 4 soll bei ausreichender Dehnbarkeit eine hohe Zug-, Druck- und Stoßfestigkeit sowie einen geringen Reibbeiwert und ein gutes Haftvermögen mit dem Polyurethankörper haben.

Zu diesem Zweck besteht die Materialbahn 4 aus einem elastischen Gewebe aus vorzugsweise Polyamidfäden bzw. -fasern sowie Fäden mit geringem Reibbeiwert, vorzugsweise Polytetrafluorethylen (PTFE) -fäden bzw. -fasern (Teflonfasern).Unabhängig von dem Aufbau der Materialbahn kann diese vorzugsweise an der Außenseite auch eine PTFE-Beschichtung aufweisen.

Die Materialbahn 4 kann erfindungsgemäß auch als Verbundkonstruktion aus Kombinationen von Vliesen, Folien und Geweben bestehen, solange sicher gestellt ist, daß diese Verbundkonstruktion ausreichende Dehnbarkeits-, Zug-, und Stoßfestigkeits- sowie Reibbeiwerte aufweist und ein gutes Haftvermögen mit Polyurethan hat. Gemäß einer weiteren Ausführungsform der Erfindung kann die die Zähne überdeckende Materialbahn 4 auch eine Beflockung aufweisen derart, daß das Materialbahngewebe mit einer dünnen Schicht kurzer Faserflocken 6 in vorwiegend senkrechter Ausrichtung zur Materialbahnoberfläche versehen ist, so wie es schematisiert dargestellt ist. Diese Beflockung kann z.B. in einem kontinuierlichen oder diskontinuierlichen Verfahren stattfinden. Das Basisgewebe wird z.B. vor der Verarbeitung auf der Laufflächenseite mit Fasern versehen, konfektioniert und anschließend vulkanisiert. Ziel ist es, durch die kurzen Fasern eine weitere Schonung des für die Materialbahn 4 verwendeten Gewebes zu erreichen, die Laufruhe des Riemen zu verbessern und die Lebensdauer zu erhöhen.

## Patentansprüche

1. Treibriemen mit einem aus unter Verwendung von 4,4'-Methylenbis-(3-chIor-2,6-diethylanilin) polymerisierten Polyurethan bestehenden Riemenkörper, in den Zugelemente aus Cordfäden eingebettet sind, **dadurch gekennzeichnet, daß** die Cordfäden (5) aus Polyester-Polyacrylat-Fasern und/oder aus PBO-Fasern bestehen.

2. Treibriemen nach Anspruch 1, **dadurch gekennzeichnet, daß** er als Zahnriemen ausgebildet ist, enthaltend
a) einen eine äußere Schicht (2) bildenden, gewebeverstärkten Polyurethankörper, an den ebenfalls aus Polyurethan bestehende Zähne (3) als innere Schicht angeformt sind sowie
b) zwischen der äußeren Schicht (2) und den Zähnen (3) befindliche, hochfeste Zugelemente aus schraubenlinienförmig gewickelten Cordfäden (5), die mit seitlichem Abstand voneinander liegen.

3. Treibriemen nach Anspruch 1 oder 2, **dadurch gekennzeichnet, daß** die Cordfäden (5) aus Polyester-PoIyacrylat-Fascrn bestehen, die durch Schmelzspinnen aus Flüssigkristall-Polymeren hergestellt sind.

4. Treibriemen nach Anspruch 3, **dadurch gekennzeichnet, daß** die Polyester-Polyacrylat-Fasern Eigenschaften im wesentlichen mindestens im Bereich der folgenden Werte aufweisen:
| | |
|---|---|
| spezifische Bruchfestigkeit (g/D) | 23,0 |
| Bruchdehnung (%) | 2- 3,3 |
| Start Modul (g/D) | 525 |
| Abriebbeständigkeit | höher als 5000 Zyklen. |

5. Treibriemen nach Anspruch 3 oder 4, **dadurch gekennzeichnet, daß** die PBO-Fasern Eigenschaften im wesentlichen mindestens im Bereich der folgenden Werte aufweisen:
| | |
|---|---|
| spezifische Bruchfestigkeit | 40 |
| Bruchdehung (%) | 3,3 |
| Start Modul (g/D) | 1200-2100 |
| Abriebbeständigkeit | ca. 3750 |

6. Treibriemen nach Anspruch 1, **dadurch gekennzeichnet, daß** er eine die innere Umfangsfläche des Riemens und damit die Zähne (3) überdeckende Materialbahn (4) aus verschleißbeständigem Material aufweist.

7. Treibriemen nach Anspruch 6, **dadurch gekennzeichnet, daß** die die Zähne (3) überdeckende Materialbahn (4) hoch dehnbar ist und eine hohe Zug-, Druck- und Stoßfestigkeit sowie einen niedrigen Reibbeiwert aufweist und ein gutes Haftver-mögen mit Polyurethan hat.

8. Treibriemen nach Anspruch 6 oder 7, **dadurch gekennzeichnet, daß** die Materailbahn (4) aus einem elastischen Gewebe aus Polyamidfäden sowie Fäden bzw. Fasern mit geringem Reibbeiwert besteht.

9. Treibriemen nach einem der Ansprüche 6 bis 8, **dadurch gekennzeichnet, daß** die Materialbahn (4) an der Außenseite eine PTFE-Beschichtung hat.

10. Treibriemen nach einem der Ansprüche 6 bis 9, **dadurch gekennzeichnet, daß** die Materialbahn (4) als Verbundkonstruktion aus Kombinationen von Vliesen, Folien und Geweben besteht.

11. Treibriemen nach Anspruch 8, **dadurch gekennzeichnet, daß** die Materialbahn (4) aus elastischem Gewebe mit darin eingearbeiteten Polytetrafluorethanfasern besteht.

12. Treibriemen nach einem der Ansprüche 6 bis 11, **dadurch gekennzeichnet, daß** das die Materialbahn (4) bildende Gewebe mit einer dünnen Schicht aus kurzen Faserflocken in vorwiegend senkrechter Ausrichtung zur Materialbahnoberfläche versehen ist.

13. Treibriemen nach Anspruch 12, **dadurch gekennzeichnet, daß** die Faserflocken (6) aus verschleißfestem und/oder reibungsarmen Fasern oder einer Kombination dieser beiden Fasern besteht.

14. Treibriemen nach Anspruch 1, **dadurch gekennzeichnet, daß** die Polyester-Polyacrylat-Fasern in dem Cord einen Anteil von 4 - 96 % und die PBO-Fasern einen Anteil von 96 - 4 % haben.

15. Treibriemen nach einem der Anspruch 1 bis 13, bei dem die Zugelemente (5) aus einer Kombination oder Teilkombination von Cordfäden der in den Ansprüchen 3 bis 5 beschriebenen Art bestehen.

## Claims

1. Transmission belt containing a belt body consisting of a polyurethane that was polymerized using 4, 4' methylene-bis (3-chloro-2,6-diethylaniline), in which belt body tension elements are embedded **characterized in that** the cord filaments (5) consist of polyester-polyacrylate fibers and/or PBO-fibers.

2. Transmission belt according to claim 1, **characterized in that** it is in the form of a thoothed beld, containing
a) a fabric-reinforced polyurethane body forming an outer layer on which are formed, as an inner layer, teeth consisting also of polyurethane and
b) high-strength tension elements of spirally wound cord filaments (5) which are disposed between the outer layer (2) and the teeth, which are laterally spaced from one another.

3. Transmission belt according to claim 1 or 2, **characterized in that** the cord filaments (5) are comprised of polyester-polyacrylate fibers, which are produced by fusion spinning from liquid crystal polymers.

4. Transmission belt according to claim 3, **characterized in that** the polyester-polyacrylate fibers have characteristics essentially at least in the range of the following values:
| | |
|---|---|
| spec. strength (g/D) | 23.0 |
| elongation of rupture (%) | 2-3,3 |
| start modulus (g/D) | 525 |
| resistance to wear | greater than 5000 cycles |

5. Transmission belt according to claim 3 or 4, **characterized in that** the PBO fibers have characteristics essentially at least in the range of the following values:
| | |
|---|---|
| spec. strength (g/D) | 40 |
| elongation of rupture (%) | 2-3 |
| start modulus (g/D) | 1200 - 2100 |
| resistance to wear | about 3750 |

6. Transmission belt according to claim 1, **characterized in that** it contains a material layer (4) of wear-resistant material, that covers the inner peripheral surface of the belt and hence the teeth (3).

7. Transmission belt according to claim 6, **characterized in that** the material layer (4) that covers the teeth (3) is highly extensible and has a high resistance to tension, pressure and impact as well as a low coefficient of friction and a good adhesion with polyurethane.

8. Transmission belt according to claim 6 or 7, **characterized in that** the material layer (4) consists of an elastic fabric of polyamide filaments as well as filaments or fibers having a low coefficient of friction.

9. Transmission belt according to one of the claims 6 to 8, **characterized in that** the material layer (4) has a PTFE-coating on the outer side.

10. Transmission belt according to one of the claims 6 to 9, **characterized in that** the material layer (4) as a composite construction consists of a combination of fleece, film and fabric.

11. Transmission belt according to claim 8, **characterized in that** the material layer (4) consists of an elastic fabric having polytetrafluoroethylene fibers that are incorporated therein.

12. Transmission belt according to one of the claims 6 to 11, **characterized in that** the fabric that forms the material layer (5) is provided with a thin layer of short fiber flocks in a predominantly perpendicular orientation relative to the surface of the material layer.

13. Transmission belt according to claim 12, **characterized in that** the fiber flocks (6) consist of wear resistant and/or low friction fibers or a combination of these two fibers.

14. Transmission belt according to claim 1, **characterized in that** the polyester-polyacrylate fibers in the cord have a proportion of 4 - 96 % and the PBO fibers have a proportion of 96 - 4 %.

15. Transmission belt according to one of the claims 1 to 13, wherein the tension elements (5) consist of a combination or partial combination of cord filaments of the type described in claims 3 to 5.

## Revendications

1. Une courroie d'entraînement avec un corps existant de courroie en polyuréthanne polymérisé au moyen de 4,4-diméthyle-(3-chlore-2,6-diéthylaniline), dans lequel sont encastrés des éléments de tension en fils de cordage, se singularisant par le fait que les fils de cordage (5) se composent de fibres de polyester-polyacrylate et (ou) de fibres de PBO.

2. Une courroie d'entraînement basée sur l'affirmation 1, se singularisant par le fait qu'elle est formée d'une courroie dentée, se composant des éléments suivants :
a) un corps en polyuréthanne à la structure renforcée et formant une couche externe (2) et sur lequel sont également profilées des dents (3) en polyuréthanne qui constituent la couche interne
b) entre la couche externe (2) et les dents (3), des éléments de tension en fils de cordage (5) enroulées de façon hélicoïdale, qui se trouvent écartés les uns des autres sur le plan latéral.

3. Une courroie d'entraînement basée sur l'affirmation 1 ou 2, se singularisant par le fait que les fils de cordage (5) sont en fibres de polyester-polyacrylate, qui sont fabriquées par des dispositifs de filage par fusion de polymères de cristal liquide.

4. Une courroie d'entraînement, basée sur l'affirmation 3, se singularisant par le fait que les caractéristiques respectent, à titre minimum, les valeurs suivantes pour les paramètres énumérés ci-après :
| | |
|---|---|
| résistance spécifique à la rupture (g/D) | 23,0 |
| allongement à la rupture (%) | 2 - 3 , 3 |
| Module initial (g/D) | 525 |
| Autonomie opérationnelle | supérieure à 5 000 cycles. |

5. Une courroie d'entraînement, basée sur l'affirmation 3 ou 4, se singularisant par le fait que les caractéristiques respectent, à titre minimum, les valeurs suivantes pour les paramètres énumérés ci-après :
| | |
|---|---|
| résistance spécifique à la rupture (g/D) | 40 |
| allongement à la rupture (%) | 2 - 3 |
| Module initial (g/D) | 1 200 - 2 100 |
| Autonomie opérationnelle | 3 750 cycles environ. |

6. Une courroie d'entraînement, basée sur l'affirmation 1, se singularisant par le fait que la surface interne de la courroie et, par conséquent, la voie en matériau (4) au contact des dents (3) font appel à un matériau qui résiste à l'usure par abrasion.

7. Une courroie d'entraînement, basée sur l'affirmation 6, se singularisant par le fait que la voie en matériau (4) au contact des dents (3)est fortement malléable et présente une forte résistance à la tension, à la pression et aux impacts ainsi qu'un faible coefficient de frottement et une bonne adhérence au polyuréthanne.

8. Une courroie d'entraînement, basée sur l'affirmation 6 ou 7, se singularisant par le fait que la voie en matériau (4) se compose d'un tissu élastique en fils de polyamide et (ou) en fibres ayant un faible facteur de frottement.

9. Une courroie d'entraînement, basée sur les affirmations 6 à 8, se singularisant par le fait que la voie en matériau (4) a un revêtement en PTFE sur le côté extérieur.

10. Une courroie d'entraînement, basée sur les affirmations 6 à 9, se singularisant par le fait que la voie en matériau (4), en ce qui concerne la construction de l'ensemble, se compose de combinaisons de molletons, feuilles et tissus.

11. Une courroie d'entraînement, basée sur l'affirmation 8, se singularisant par le fait que la voie en matériau (4) se compose d'un tissu élastique contenant des fibres de PTFE.

12. Une courroie d'entraînement, basée sur les affirmations 6 à 11, se singularisant par le fait que le tissu faisant partie de la voie en matériau (4) comporte une mince couche de flocons courts de fibres dans un alignement essentiellement vertical par rapport à la surface de la voie en matériau.

13. Une courroie d'entraînement, basée sur l'affirmation 12, se singularisant par le fait que les flocons de fibres se composent de fibres qui résistent à l'usure ou de fibres à faible coefficient de frottement ou d'une combinaison de ces deux types de fibres.

14. Une courroie d'entraînement, basée sur l'affirmation 1, se singularisant par le fait que la teneur en fibres de polyester-polyacrylate du cordage s'élève à 4 - 96% et celle des fibres de PBO à 96 - 4%.

15. Une courroie d'entraînement, basée sur les affirmations 1 à 13, se singularisant par le fait que les éléments de tension (5) se composent d'une combinaison totale ou partielle des fils de cordage qui sont décrits aux affirmations 3 à 5.
